# FASCICULE DE BREVET EUROPEEN

(11) **EP 0 576 441 B1**
(45) Date de publication et mention de la délivrance du brevet: **13.12.1995**
(21) Numéro de dépôt: 92905133.2
(22) Date de dépôt: 20.03.1992
(51) Int. Cl.: D06N 7/00, D06N 3/00, A01N 25/34, A01N 53/00, A01N 57/00

(54) **PRODUITS DE REVETEMENT DE SOLS ET/OU DE MURS A EFFET ACARICIDE ET PROCEDE POUR LEUR OBTENTION**
AKARIZIDHALTIGE BODEN- UND/ODER WANDBELAEGE UND DEREN HERSTELLUNGSVERFAHREN
PRODUCTS FOR COVERING FLOORS AND/OR WALLS HAVING ACARICIDE EFFECTS AND PRODUCTION METHOD

(30) Priorité: 21.03.1991 EP 91200636
(43) Date de publication de la demande: 05.01.1994
(73) Titulaire: SOMMER S.A., F-92022 Nanterre Cédex (FR)
(72) Inventeur: CALLEBERT, Frank, F-59000 Lille (FR)
(74) Mandataire: Van Malderen, Michel
(86) Numéro de dépôt international: EP9200644
(87) Numéro de publication internationale: WO9216683

(56) Documents cités:
- WO-A-90/14107
- CHEMICAL ABSTRACTS, vol. 113, no. 11, 10 Septembre 1990, Columbus, Ohio, US; abstract no. 93315W, & JP-A-0268364 (NIPPON TERPENE) page 278
- DERWENT JAPANESE PATENTS REPORT Derwent Publications Ltd., London, GB; JP,A,2 142 705 (DAIWA KAGAKU KOGYO) 31 Mai 1990
- DERWENT JAPANESE PATENTS REPORT Derwent Publications Ltd., London, GB; & JP,A,62 158 201 (IKARI YAKUHIN) 14 juillet 1987
- DERWENT JAPANESE PATENTS REPORT Derwent Publications Ltd., London, GB; & JP,A,3 031 206 (FUMAKILLA) 12 février 1991
- DERWENT JAPANESE PATENTS REPORT Derwent Publications Ltd., London, GB; & JP,A,1 224 304 (SUMITOMO CHEM.) 7 Septembre 1987
- WORLD PATENTS INDEX LATEST Derwent Publications Ltd., London, GB; AN 89-035387 & JP,A,63 308 149 (SHINTO PAINT) 9 juin 1987

## Description

### Objet de l'invention

La présente invention concerne des produits de revêtement de sols ou de murs à base textile, dotés de propriétés acaricides.

L'invention s'étend également aux procédés de production de tels produits.

### Arrière-plan technologique

On sait grâce aux travaux de Voorhorst et Spiekssma que de nombreuses allergies dites aux poussières de maison sont causées par les acariens. Une bibliographie relativement complète sur le sujet a paru dans l'article de J.E.M.H. van Bronswijk: "Hausstaubmilben, Vorkommen und Bedeutung" dans Allergologie, 1, N° 2, 1978, p. 55. Il est connu que les acariens pyroglyphides, essentiellement représentés par Dermatophagoïdes pteronyssinus, Dermatophagoïdes farinae et Euroglyphus maynei, se nourrissent de squames humaines et animales (peaux mortes, débris d'ongles, poils, plumes) : la perte journalière par individu de 70 à 140 mg de squames permet à plusieurs milliers d'acariens de vivre pendant plusieurs mois. De plus, les moisissures font partie de leur biotope, car elles leur fournissent un apport vitaminique et permettent la prédigestion des squames. Ils vivent dans les endroits où se trouve leur nourriture, c'est-à-dire les lieux de repos de l'homme, dans des conditions optimales d'humidité de l'air (80% d'hygrométrie) et de température (25°C) et à l'abri de la lumière car ils sont sensibles aux UV solaires. Les acariens pyroglyphides, qu'ils soient morts ou vivants, sont allergisants. Il en est de même de leurs déjections et de leurs téguments. Il en résulte que toute action sur l'environnement des patients allergiques aux acariens doit associer un traitement acaricide.

Des études récentes sur l'effet des acariens ont été publiées par Platts-Mills et Chapman dans J. Allergy Clin. Immunol., 80, 6, décembre 1987, p. 755 et par Bischoff E. - Méthodes actuelles de quantification des acariens dans l'habitat. Rev. fr. Allergol., 1988, 28 (2), pp. 115-122.

Si la literie est l'endroit qui recèle le plus d'acariens, les squames d'origine humaine et animale se retrouvent abondamment sur la surface du sol et notamment dans les revêtements de sol et/ou de murs comme les moquettes et les tapis qui constituent de ce fait un milieu de prolifération secondaire des acariens.

Nous entendons ici par revêtement de sols ou de murs textile, un revêtement obtenu par la mise en forme d'un matériau textile par exemple du fil, de la fibre, de la bourre, par les techniques connues en soi par exemple par le touffetage, l'aiguilletage, mais aussi par les techniques dites de verticalisation décrites dans la publication WO 91/00382 ou encore par les techniques décrites dans les brevets FR-8 607 842 et EP-0 811 460 qui font intervenir un procédé de soudure par ultrasons.

Afin de fixer les fibres textiles, afin d'assurer la stabilité dimensionnelle et afin de répondre à des exigences de confort, les revêtements de sols et/ou de murs comme précédemment décrits reçoivent en envers une couche qui généralement est déposée par enduction et qui forme un envers polymérique appelé dans ce qui suit matrice polymérique. Elle assume également une série d'autres fonctions telles que l'isolation thermique et phonique, l'accroissement de la résistance mécanique...

Il convient de noter que dans le cas des revêtements de sols et/ou de murs textiles obtenus par les procédés classiques de touffetage ainsi que ceux obtenus par les techniques de verticalisation ou de soudure par ultrasons, l'envers comprend également un non-tissé de préférence en polyéthylènetéréphtalate (PET) et qui pourra donc entrer dans la définition de l'envers.

Pour ces raisons l'envers appelé matrice polymérique est généralement composite et est souvent constitué de plusieurs couches superposées.

Les produits les plus largement utilisés pour constituer l'envers sont des matrices de PVC plastifié, des mousses de polyuréthane ou encore des latex de type styrènebutadiène et éventuellement des combinaisons de ceux-ci plus généralement en combinaison avec d'autres matériaux tels que des voiles de non-tissé ou des voiles de verre.

De par leur configuration, les revêtements textiles de sols et/ou de murs, en particulier les produits cités précédemment permettent en effet de retenir les squames dont se nourrissent les acariens. Ils constituent de plus un milieu à la fois à l'abri de la lumière, sans grand mouvement d'air, présentant une température et une hygrométrie stables, ce qui est favorable à leur développement. Contrairement à la literie, ce type de milieu est difficile à traiter car il est fixe et difficile à nettoyer en profondeur.

Il convient de noter que les acariens, contrairement aux teignes (appelées couramment mites) ne se nourrissent pas des matières textiles qui constituent leur milieu de vie. Un traitement des fibres textiles en vue de leur conférer un effet acaricide par ingestion, comme on réalise par exemple les traitements anti-mites est donc inopérant.

Il existe bien entendu de nombreux produits acaricides à appliquer par pulvérisation ou par shampoing qui ne présentent cependant que des effets de courte durée. De plus, au cours des opérations classiques d'entretien (aspirateur, shampoing, injection/extraction), ils sont éliminés et de toute manière, ils n'agissent pas au foyer où se trouvent les acariens. Des produits commerciaux de ce type sont vendus sous le nom ACARDUST, ALLERBIOCID, ACAROSAN (marques déposées).

On a également préconisé des peintures à effet acaricide sous la dénomination ARTILIN produit par la firme 3A (Les Cahiers Techniques du Bâtiment, N° 116, avril 1990, p. 155).

Des solutions visant à obtenir une diffusion de substance insecticide ou anti-parasitaire en milieu turbulent ont également été décrites, notamment dans les documents EP-A-0 211 207 et EP-A-0 338 821.

Le document JP-A-2 142 705 décrit l'utilisation de molécules telles que les acides benzoïques, salicyliques et déhydroacétiques (qui ne sont pas des agents acaricides) et qui sont de petites molécules) destinés à être pulvérisés sur des vêtements, tapis ou autres.

Le document JP-A-62 158 201 décrit une solution selon laquelle on fixe un tapis ou un tatami au sol avec un adhésif qui contient un agent acaricide. En particulier, cette solution n'est pas destinée à des revêtements de sols et/ou de murs qui présentent un envers sous forme de matrice polymérique. En outre, il est impossible d'effectuer des poses libres sur le sol de tels revêtements selon la solution préconisée dans ce document.

Le document JP-A-63 308 149 décrit l'utilisation d'une feuille de papier en non-tissé classique qui est poreuse et imprégnée d'une préparation acaricide destinée à la protection des matelas japonais.

Le document JP-A-3 031 206 décrit la formulation d'un traitement curatif destiné aux matelas et tatamis, permettant de détruire les acariens et autres insectes.

Le document JP-A-1 224 304 décrit une préparation contenant un pyréthinoïde qui peut être vaporisé ou étalé dans différentes parties d'une habitation et en particulier sur des tapis.

Le document WO-A-9014107 décrit l'utilisation d'esters d'acide phosphorique afin d'éviter le développement de bactéries et de microbes dans une moquette. Ce document n'apporte pas de solution au problème des allergies causées spécifiquement par les acariens.

Il convient en outre de noter que de nombreux produits insecticides ont de mauvaises propriétés acaricides.

Aucune des références citées n'apporte ou ne suggère une solution de longue durée aux risques allergiques que présente le développement des acariens dans les revêtements de sols ou de murs modernes à base textile pourvus d'un envers comportant une matrice polymérique tels que les moquettes, etc.

En particulier, les solutions curatives, qui ne sont mises en oeuvre que lorsque des manifestations allergiques sont observées nécessitent le plus souvent l'utilisation de quantités importantes de produits actifs provoquant quelquefois eux-mêmes des allergies ou des intolérances secondaires par suite de la concentration élevée de ceux-ci dans l'atmosphère.

Le document JP-A-0 268 364/90 au nom de Nippon Terpene propose une solution de relarguage retardé d'un produit de traitement microporé dans une résine.

Ce document décrit un revêtement de sols dit "acaricide" comprenant une couche fibreuse et une couche résineuse disposée au dos de la couche fibreuse, caractérisé en ce que la couche résineuse contient un agent comprenant du menthone et qui présente un effet de relarguage, et dans lequel un agent qui est la cyclodextrine a été introduit afin de ralentir l'effet de migration et d'élimination rapide du menthone. Cette poudre de dextrine ne migre en aucun cas dans la matrice résineuse.

Un problème complémentaire rencontré dans le même domaine réside dans la remise en suspension dans l'atmosphère lors des opérations de nettoyage ou de rénovation des corps, des téguments et des déjections des acariens.

### But visé de la présente invention

Le but visé par la présente invention est donc de fournir un produit de revêtement de sols et/ou de murs, à base textile qui soit traité de manière à lui conférer des propriétés acaricides à effet préventif et ceci avec de longues rémanences, en particulier des rémanences de l'ordre de plusieurs années tout en éliminant le problème de la remise en suspension dans l'atmosphère des corps, téguments et déjections des acariens.

La présent invention concerne des produits de revêtement de sols et/ou de murs à base textile pourvus d'un envers comprenant une matrice polymérique, caractérisés en ce que ladite matrice polymérique contient d'une part un ou plusieurs agents acaricides choisis parmi le groupe constitué par les pyréthrénoïdes, les composés du type carbamate, les organophosphorés ou les organoallogénés, et d'autre part un agent possédant des propriétés de migration et exercant un effet véhiculeur pour lesdits agents acaricides, cet agent véhiculeur présentant également des proprietés collantes.

Ces produits de revêtement, peuvent être constitués par des fibres touffetées ou aiguilletées ou verticalisées ou encore soudées par ultrasons sur un support "non-tissé" pourvu d'une matrice polymérique.

L'agent véhiculeur peut être un constituant entrant habituellement dans la composition de la matrice polymérique comme par exemple un plastifiant pour une matrice PVC ou un agent tensio-actif (agent de surface ou surfactant à propriétés collantes pour une matrice à base de latex.

Les autres caractéristiques et avantages de la présentes invention apparaîtront dans la description qui suit.

### Brève description des figures

- - La figure 1: représente, pour différentes températures, la volatilité d'un plastifiant classique exprimée en % de perte de poids en fonction du temps.
- - La figure 2: représente la volatilité de différents plastifiants usuels en fonction de la concentration du plastifiant dans le film calandré constituant la matrice polymérique.
- - La figure 3: représente une coupe schématique d'un revêtement de sols de type touffeté ayant pour envers une structure adaptée à la découpe dalle à base de PVC, auquel est applicable le traitement de l'invention.
- - La figure 4: représente une coupe schématique d'une revêtement de sols de type touffeté ayant pour envers une structure de type mousse styrène-butadiène.
- - La figure 5: représente une coupe schématique d'un revêtement de sols de type touffeté ayant pour envers une structure résine de styrène-butadiène contrecollée à une toile

### Solution proposée par l'invention

La solution apportée par la présente invention repose sur l'observation des propriétés de migration et de volatilité de certains constituants entrant dans la composition de la matrice polymérique d'envers et sur le fait que ces constituants et en particulier les plastifiants ou agents tensio-actifs (surfactants) habituellement presents dans la matrice polymérique, sont capables d'entraîner avec eux de faibles taux d'agents acaricides lorsque ceux-ci ont une affinité avec leur véhiculeur.

Dans le cas des envers réalisés par une matrice polymérique, les deux phénomènes de migration et de volatilité sont simultanés et complementaires. Ces phénomènes gouvernent la concentration verticale des agents utilisés comme plastifiants et/ou tensio-actifs. La volatilité ne concerne que la couche supérieure en contact avec l'atmosphère alors que la migration concerne toutes les couches du complexe de la matrice polymérique.

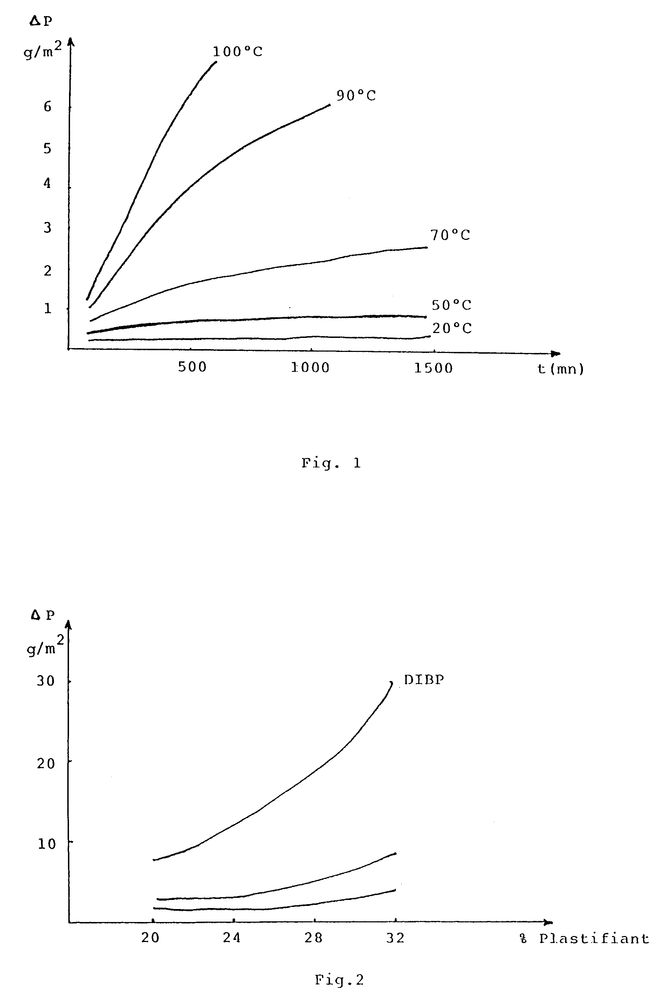

En particulier, des études ont montré que la volatilité des plastifiants ou tensio-actifs dépendait de la concentration de ceux-ci à l'état pur ou en mélange, de leur nature, de la composition des mélanges, du temps de contact avec l'atmosphère, de la turbulence et de la température de l'air proche de la surface. Les courbes de la volatilité d'un plastifiant classique en fonction du temps pour différentes températures sont celles présentées a la figure 1.

La principale propriété utilisée dans la présente invention est que la volatilité de certains plastifiants ou agents tensio-actifs dépend de la concentration de ceux-ci dans la matrice polymérique, cette dernière agissant comme une éponge pour de faibles taux de plastifiant ou agent tensio-actif.

Cette propriété apparait d'après la figure 2 qui représente la volatilité de certains plastifiants en fonction de la concentration dans un film calandré.

De cette concentration dépendent également les propriétés migratoires de certains plastifiants qui tendent à réguler et à équilibrer leur concentration dans les différentes couches.

Les migrations se manifestent généralement pour des molécules peu compatibles avec la matrice polymérique, c'est-à-dire présentant pour des raisons de polarité, de poids moléculaire ou de structure chimique, peu d'affinité pour cette matrice polymérique. Certains plastifiants comme ceux du type phtalates précités sont largement utilisés pour les PVC et les tensioactifs sont présents dans les latex du type styrène-butadiène par exemple.

L'ajustement précis de la quantité de certains plastifiants ou tensio-actifs capables d'entraîner par affinité les agents acaricides permet de régler la volatilité des agents plastifiants ou tensio-actifs et acaricides dans un milieu non turbulent (air stagnant dans le fond de la moquette) et de ce fait crée une différence de concentration locale en surface générant la migration du complexe plastifiant ou tensio-actif/acaricide se trouvant plus profondément. Un système de relarguage de quantité constante est donc créé permettant d'ajuster les quantités à relarguer et ainsi le temps de rémanence.

En outre, les produits appliqués à l'envers du textile pour réaliser la matrice polymérique doivent comporter obligatoirement une série de produits nécessaires à leur mise en oeuvre qualifiés en anglais de "processing aids" (c'est-à-dire d'adjuvants de traitement ou de mise en oeuvre) qui présente intrinsèquement des propriétés de migration au cours du temps.

Cette propriété est mise avantageusement à profit de manière inventive pour conférer des durées de rémanence élevées lorsqu'un produit acaricide est incorporé dans la matrice polymérique constituant l'envers du revêtement de sols et/ou de murs, selon l'invention.

Dans le cas des produits obtenus par les procédés de touffetage classique ou par ceux dits de verticalisation ou de soudure à ultrasons, la matrice polymérique peut être constituée d'une enduction du non-tissé servant de support aux fibres textiles.

La présente invention permet avantageusement d'obtenir un relarguage lent et constant, d'avoir la possibilité de faire parvenir au foyer de développement des acariens un acaricide de contact en quantité nécessaire et suffisante, de constituer une réserve d'acaricides dans la matrice polymérique, et de contribuer par le relarguage des tensio-actifs ou plastifiants à propriétés collantes, au blocage des corps, des téguments et des déjections des acariens en évitant la remise en suspension dans l'atmosphère lors des opérations de rénovation en particulier lors de l'aspiration.

Cette solution originale n'a pas été suggérée dans l'état de la technique et il est inattendu qu'elle puisse conférer des propriétés de rémanence de l'ordre de plusieurs années.

La concentration de l'agent acaricide ne doit pas être élevée. Des valeurs de relarguage de l'ordre de quelques parts par million à quelques centaines de parts par million (ppm) au niveau du foyer de prolifération des acariens sont largement suffisantes. De telles valeurs peuvent être réalisées en incorporant des teneurs de l'ordre de 0,1 à 10% en poids de la couche de l'envers dans lequel les agents acaricides sont incorporés. Il convient de noter à cet égard qu'il n'est pas nécessaire d'incorporer les agents acaricides dans toute la masse de l'envers. En particulier, dans le cas d'un envers composite, la présence des agents acaricides dans une partie de l'envers, de préférence celle proche de la partie textile par exemple à la base de la partie touffetée ou aiguilletée est suffisante.

Les agents acaricides mis en oeuvre peuvent être ceux préconisés actuellement et disponibles dans le commerce. Il semble particulièrement recommandable de recourir à des composés photostables et/ou d'incorporer avec le produit acaricide les agents de photostabilisation (anti-UV notamment) connus tels que les dérivés de stilbène ou autres.

Les pyréthrénoïdes de type "méthrine", tels que: Cyperméthrine, Deltaméthrine (1R,trans-(+)-2,2 diméthyl 3-(2-méthyl-1-propényl)cyclopropane-carboxylate de 5-(phénylméthyl)-3-furanyl)-méthyl (bioresméthrine) et Perméthrine conviennent particulièrement, de même que des composés du type benzène-acétate tels que: le cyano-(3-phénoxybenzyl)méthyl 4-chloro(α)-(1-méthyléthyl)benzène-acétate (Fenvalerate) ou des organophosphorés tels que Dibrom, Endosulfan, ou Chlorfenvinphos (marques déposées). Un certain nombre de ces produits sont décrits dans les documents EP-A-0 211 207 Comme il est d'ailleurs décrit déjà dans ces documents, selon l'invention, il est également possible d'associer aux molécules à activité acaricide des "synergisants" qui en accroissent l'activité.

L'invention concerne également un procédé de production d'un revêtement de sols et/ou de murs dans lequel on applique sur une base textile réalisée notamment par les techniques déjà citées, un envers constitué par une matrice polymérique, le procédé étant caractérisé en ce que ladite matrice polymérique contient un ou plusieurs agents acaricides tels que definis ci-dessus et un agent vehiculeur par lesdits agents acaricides et possédant des propriétés collantes.

Selon ce procédé, les agents acaricides sont ajoutés de préférence dans la préparation devant être appliquée comme envers simultanément avec les plastifiants et/ou les agents tensio-actifs ou après l'adjonction de ces derniers.

C'est-à-dire des substances dont les propriétés migratoires sont bien connues dans les matrices polymériques et en particulier dans les envers de revêtements textiles.

### Description de plusieurs modes d'exécution préférés de l'invention

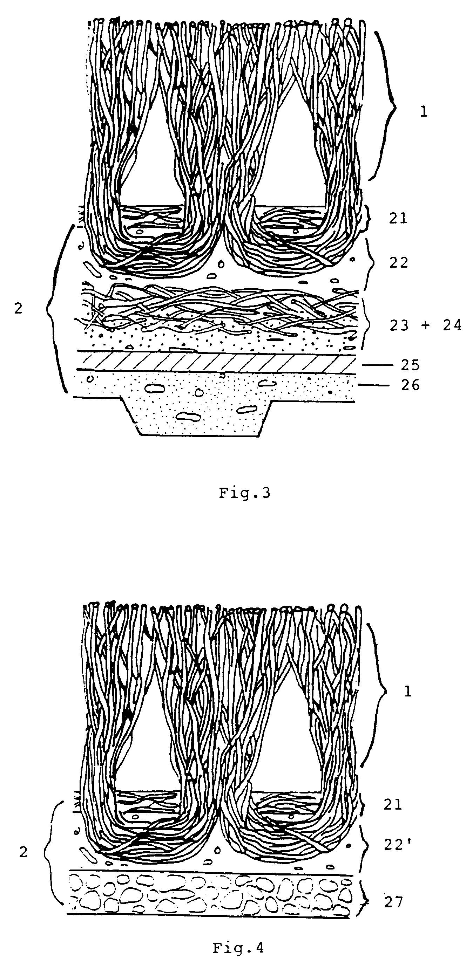

Un exemple typique d'un revêtement de sols est illustré à la figure 3.

Celui-ci est constitué essentiellement par une partie textile (constituée de fibres naturelles ou synthétiques), portant le repère général 1, se présentant sous forme par exemple d'un produit touffeté (velours ou boucle) sur un envers composite portant le repère général 2. Les fibres "émergent" plus ou moins verticalement par rapport à cet envers.

Cet envers 2 est constitué dans le premier exemple choisi d'un non-tissé 21, de préférence en polyéthylènetéréphtalate (PET) et d'un poids surfacique de 120 g/m², d'une matrice PVC (précoat) 22 d'un poids surfacique de 800 g/m², d'un voile de verre 23 combiné à une couche dite "de complexage" en PVC 24 et présentant un poids surfacique total de 400 g/m², d'un film calandré 25 d'un poids surfacique de 500 g/m² et enfin d'une semelle en PVC 26 de préférence gaufrée d'un poids surfacique de 1500 g/m².

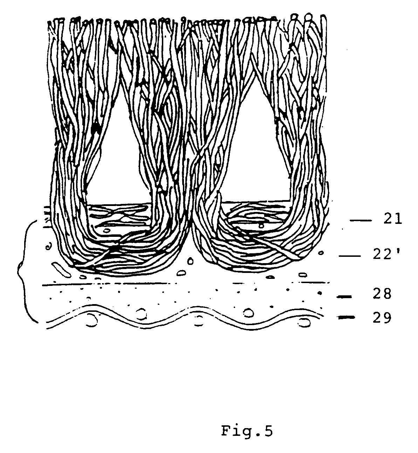

Selon d'autres modes d'exécution représentés aux figures 4 et 5, l'envers 2 petit être constitué d'un non-tissé 21 et d'un précoat en latex de styrène-butadiène 22' sur lequel est disposée soit une seule enduction latex moussée (voir figure 4) soit une enduction latex double dossier 28 et une toile d'envers 29 (voir figure 5).

Les fibres qui constituent la partie textile 1 sont maintenues dans la matrice PVC 22 ou latex 22'. A proximité de la surface du non-tissé 21, entre les fibres textiles, se constitue un milieu de propagation et de développement des acariens résultant de l'apport nutritionnel constitué par les squames qui tombent sur le revêtement de sol et qui, passant entre les fibres, s'accumulent a la surface de l'envers. Les fibres entremêlèes protègent ce milieu de la lumière, de la circulation d'air et stabilisent la température.

L' incorporation de l'acaricide se réalise dans la masse de l'envers et de préférence a proximité du milieu favorable au développement des acariens, à savoir dans le non-tissé 21 et/ou dans la matrice en PVC 22 ou en latex 22'.

### Exemples de formulation

L'invention sera décrite plus en détail à titre d'illustration sans caractère limitatif a l'aide de trois exemples de formulation pour l'invention (les proportions et pourcentages sont exprimés en poids).

### Exemple 1: Envers PVC pour dalle textile

Dans 100 parties de polymère, on incorpore successivement:

| Plastifiants | |
|---|---|
| BBP (benzènebutylphtalate) | 4 à 6 % |
| DDB (dodécylbenzène) | 10 à 15 % |
| DIMP (diisométhylphtalate) | 15 à 20 % |
| Charge | 50 à 60 % |
| Stabilisant | 0,4 à 2 % |

| Acaricides | |
|---|---|
| Pyréthrénoïdes | 0,3 à 1,2 % |
| et/ou | |
| Organophosphoré | 0,5 à 1,5 % |
| et/ou | |
| Carbamates | 1,0 à 3,0 % |

| Synergisant | |
|---|---|
| Butoxyde de pyperonyle | 5 à 10 % |
| Enduction au tri-cylindres à 900 g/m² | |

### Exemple 2: Envers pour support de type SBR

| | |
|---|---|
| Latex SBR | 15 à 20 % |
| Antimousse | 0,01 à 0,1 % |

| Epaississant | |
|---|---|
| Carboxyméthylcellulose CMC | 30 à 35 % |
| Eau | 45 à 50 % |

| Synergisant | |
|---|---|
| Butoxyde de pypéronyle | 3 à 7 % |

| Acaricide | |
|---|---|
| Pyréthrinoïdes | 0,4 à 2,6 % |
| Organophosphoré | 0,6 à 3 % |
| Mouillant | 0,2 à 0,4 % |
| Enduction à la racle à 500 g/m² | |

### Exemple 3: Formule pour l'enduction du non-tissé

| | |
|---|---|
| Latex SBR | 30 à 40 % |
| Dispersant | 0,2 à 0,4 % |
| Antimousse | 0,02 à 0,1 % |

| Epaississant | |
|---|---|
| Carboxyméthylcellulose CMC | 40 à 60 % |
| Adjuvant | 1 à 1,5 % |

| Synergisant | |
|---|---|
| Butoxyde de pypéronyle | 3 à 5 % |

| Acaricide | |
|---|---|
| Pyréthrinoïdes | 1 à 5 % |
| Organophosphoré | 3 à 7 % |
| Enduction à la racle à 25 g/m² | |

## Revendications

1. Produit de revêtement de sols et/ou de murs à base textile (1) pourvu d'un envers comportant une matrice polymérique (2), caractérisé en ce que ladite matrice polymérique (2) contient d'une part un ou plusieurs agents acaricides choisis dans le groupe constitué par les pyréthrénoïdes, les composés du type carbamate, les organophosphorés ou les organoallogénés, et d'autre part un agent possédant des propriétés de migration et exerçant un effet véhiculeur pour lesdits agents acaricides, cet agent véhiculeur présentant également des propriétés collantes.

2. Produit de revêtement de sols et/ou de murs selon la revendication 1, caractérisé en ce qu'il est constitué par des fibres textiles (1) touffetées ou aiguilletées ou verticalisées ou encore soudées par ultrasons sur un support "non-tissé" (21) pourvu d'une matrice polymérique (22 ou 22').

3. Produit de revêtement de sols et/ou de murs selon la revendication 1 ou 2, caractérisé en ce que l'agent véhiculeur desdits agents acaricides est un plastifiant et/ou un agent tensioactif à propriétés collantes.

4. Produit de revêtement de sols et/ou de murs selon l'une quelconque des revendications précédentes, caractérisé en ce que les agents acaricides sont utilisés conjointement avec un agent de photostabilisation et/ou un synergisant.

5. Produit de revêtement de sols et/ou de murs selon l'une quelconque des revendications précédentes, caractérisé en ce que le total des agents acaricides dans la partie de la matrice polymérique (2) où ils sont présents constitue 0,1 à 10% en poids de ladite partie de matrice polymérique.

6. Procédé de production d'un revêtement de sols et/ou de murs dans lequel on applique sur une base textile réalisée notamment par touffetage ou par aiguilletage ou par une technique de verticalisation ou encore par une technique de soudure à ultrasons, un envers constitué par une matrice polymérique, caractérisé en ce que ladite matrice polymérique (2) contient d'une part un ou plusieurs agents acaricides choisis dans le groupe constitué par les pyréthrénoïdes, les composés du type carbamate, les organophosphorés ou les organoallogénés, et d'autre part un agent possédant des propriétés de migration et exerçant un effet véhiculeur pour lesdits agents acaricides, cet agent véhiculeur présentant également des propriétés collantes.

7. Procédé selon la revendication 6, caractérisé en ce que l'agent véhiculeur est un plastifiant et/ou un agent tensioactif à propriétés collantes.

8. Procédé selon la revendication 7, caractérisé en ce que le ou les agents acaricides sont ajoutés dans la préparation devant être appliquée sur l'envers en même temps que ou aprés l'adjonction de plastifiant et/ou d'agent tensioactif.

## Claims

1. Floor covering and/or wall covering product having a textile base (1) provided with a backing comprising a polymer matrix (2) characterized in that the said polymer matrix (2) contains on one hand one or more acaricides chosen in the group consisting of the pyrethrenoids, the compounds of the carbamate type, the organophosphorus compounds or the organohalogen compounds and on the other hand an agent which possesses migration properties and exerts a carrier effect for the said acaricides, said carrier agent exhibiting adhesive properties.

2. Floor covering and/or wall covering product according to Claim 1, characterized in that it consists of textile fibres (1) tufted or needle-punched or verticalized or ultrasonically welded onto a "nonwoven" support (21) provided with a polymer matrix (22 or 22').

3. Floor covering and/or wall covering product according to Claim 1 or 2, characterized in that the carrier agent of the said acaricides is a plasticizer and/or a surfactant exhibiting adhesive properties.

4. Floor covering and/or wall covering product according to any one of the preceding claims, characterized in that the acaricides are used conjointly with a photostabilizer and/or synergist.

5. Floor covering and/or wall covering product according to any one of the preceding claims, characterized in that the total of the acaricides in the part of the polymer matrix (2) in which they are present constitutes 0.1 to 10% by weight of the said part of the polymer matrix.

6. Process for the production of a floor covering and/or wall covering in which there is applied, onto a textile base produced in particular by tufting or by needle-punching or by a verticalization technique or by an ultrasonic welding technique, a backing consisting of a polymer matrix, characterized in that the said polymer matrix (2) contains on one hand one or more acaricides chosen in the group consisting of the pyrethrenoids, the compounds of the carbamate type, the organophosphorus compounds or the organohalogen compounds and on the other hand an agent which possesses migration properties and exerts a carrier effect for the said acaricides, this carrier agent exhibiting likewise adhesive prperties.

7. Process according to Claim 6, characterized in that the carrier is a plasticizer and /or a surfactant which has adhesive properties.

8. Process according to Claim 7, characterized in that the acaricides are added to the preparation which is to be applied to the backing, simultaneously with or after the plasticizer and/or the surfactant.

## Patentansprüche

1. Boden- und/oder Wandbelag auf Textilbasis (1) , der mit einer Rückseite versehen ist, die eine polymere Grundmasse (2) umfaßt, dadurch gekennzeichnet, daß die polymere Grundmasse (2) einerseits ein oder mehrere akarizide Mittel enthält, die aus der Gruppe ausgewählt sind, die aus den Pyrethrenoiden, den Verbindungen vom Typ Carbamat, den Organophosphorverbindungen oder den Organohalogenverbindungen besteht, und andererseits ein Mittel enthält, das Migrationseigenschaften besitzt und eine Trägerwirkung auf die akariziden Mittel hat, wobei dieses Trägermittel außerdem Klebeigenschaften aufweist.

2. Boden- und/oder Wandbelag gemäß Anspruch 1, dadurch gekennzeichnet, daß er aus Textilfasern (1) besteht, die getuftet oder genadelt oder vertikalisiert sind, oder auch mit Ultraschall auf eine "nicht-gewebte" Unterlage (21) geschweißt sind, die mit einer polymeren Grundmasse (22 oder 22') versehen ist.

3. Boden- und/oder Wandbelag gemäß Anspruch 1 oder 2, dadurch gekennzeichnet, daß das Trägermittel der akariziden Mittel ein Plastifikator und/oder ein grenzflächenaktives Mittel mit Klebeigenschaften ist.

4. Boden- und/oder Wandbelag gemäß irgendeinem der vorhergehenden Ansprüche, dadurch gekennzeichnet, daß die akariziden Mittel zusammen mit einem Photostabilisierungsmittel und/oder einem synergetischen Mittel verwendet werden.

5. Boden- und/oder Wandbelag gemäß irgendeinem der vorhergehenden Ansprüche, dadurch gekennzeichnet, daß der gesamte Anteil der akariziden Mittel an dem Teil der polymeren Grundmasse (2), in dem diese akariziden Mittel enthalten sind, 0,1 bis 10 Gewichtsprozent dieses Teils der polymeren Grundmasse beträgt.

6. Verfahren zur Herstellung eines Boden- und/oder Wandbelags, bei dem auf eine Textilgrundlage, die insbesondere durch Tuften oder durch Nadeln, oder durch eine Vertikalisierungstechnik, oder auch durch eine Ultraschall-Schweißtechnik verwirklicht wird, eine aus einer polymeren Grundmasse bestehende Rückseite aufgebracht wird, dadurch gekennzeichnet, daß die polymere Grundmasse (2) einerseits ein oder mehrere akarizide Mittel enthält, die aus der Gruppe ausgewählt sind, die aus den Pyrethrenoiden, den Verbindungen vom Typ Carbamat, den Organophosphorverbindungen oder den Organohalogenverbindungen besteht, und andererseits ein Mittel enthält, das Migrationseigenschaften besitzt und eine Trägerwirkung auf die akariziden Mittel hat, wobei dieses Trägermittel außerdem Klebeigenschaften aufweist.

7. Verfahren gemäß Anspruch 6, dadurch gekennzeichnet, daß das Trägermittel ein Plastifikator und/oder ein grenzflächenaktives Mittel mit Klebeigenschaften ist.

8. Verfahren gemäß Anspruch 7, dadurch gekennzeichnet, daß das oder die akariziden Mittel zusammen mit, oder nach dem Plastifikator und/oder grenzflächenaktiven Mittel zu dem auf die Rückseite auf zubringenden Gemisch hinzugegeben werden.
